# FASCICULE DE BREVET EUROPEEN

(11) **EP 1 370 361 B1**
(45) Date de publication et mention de la délivrance du brevet: **21.01.2009**
(21) Numéro de dépôt: 02716880.6
(22) Date de dépôt: 07.03.2002
(51) Int. Cl.: B01L 11/00, B08B 3/00

(54) **TETE DE LAVAGE ET D'EXTRACTION POUR APPAREIL DE LAVAGE DE MICROPLAQUES ET APPAREIL CORRESPONDANT**
REINIGUNGS- UND EXTRAKTIONSKOPF FÜR EINE VORRICHTUNG ZUM WASCHEN VON MIKROTITERPLATTEN UND ZUGEHÖRIGE WASCHVORRICHTUNG
WASHING AND EXTRACTING HEAD FOR MICROPLATE WASHING APPLIANCE AND CORRESPONDING APPLIANCE

(30) Priorité: 08.03.2001 FR 0103182
(43) Date de publication de la demande: 17.12.2003
(73) Titulaire: Bio-Rad Pasteur S.A., 92430 Marnes la Coquette (FR)
(72) Inventeur: MULLER, Franck, F-67100 Strasbourg (FR)
(74) Mandataire: Nuss, Pierre
(86) Numéro de dépôt international: PCT/FR2002/000832
(87) Numéro de publication internationale: WO 2002/070135

(56) Documents cités:
- EP-A- 0 903 181
- FR-A- 2 536 313
- US-A- 4 493 896
- US-A- 4 635 665
- US-A- 4 909 992
- US-A- 5 951 783

## Description

La présente invention concerne le domaine des techniques de diagnostic et de test médical au moyen de microplaques, et plus particulièrement le traitement automatique de telles plaques, et a pour objet une tête de lavage et d'extraction pour un automate de lavage, ainsi qu'un appareil ou un poste de lavage de microplaques comportant une telle tête.

Actuellement, de nombreux tests médicaux sont réalisés en batterie par l'intermédiaire de microplaques se présentant sous la forme d'une plaque support en matériau plastique pourvue d'une pluralité de renfoncements en forme de puits recevant chacun un échantillon à analyser, lesdits puits d'analyse étant généralement arrangés selon une disposition matricielle plane à rangées et colonnes mutuellement perpendiculaires.

Avant analyse, ces microplaques doivent être traitées en vue de la préparation et du conditionnement des différents échantillons sous une forme (mise en solution) adaptée aux tests et/ou aux manipulations opératoires à réaliser et, après prélèvement ou analyse, il est nécessaire de nettoyer lesdits puits par lavage, éventuellement en plusieurs passages, et rinçage.

A cet effet, lesdites microplaques sont disposées ou acheminées dans un automate de lavage ou laveur principalement constitué d'un support destiné à recevoir lesdites microplaques et d'une tête de lavage et d'extraction mobile associée à des circuits fluidiques d'amenée et d'évacuation.

Le support des microplaques et la tête peuvent être déplacés relativement l'un par rapport à l'autre selon au moins une direction rectiligne située dans le plan de la microplaque en position de traitement et selon une direction perpendiculaire audit plan.

Une telle tête est, de manière connue, mobile au-dessus de la ou des microplaque(s) en position de traitement et comprend généralement un alignement d'aiguilles ou de tubulures de distribution reliées à un circuit d'alimentation en liquide(s) de lavage et/ou de rinçage et un alignement d'aiguilles ou de tubulures d'aspiration reliées à un circuit d'évacuation et/ou de récupération, à chaque aiguille du premier type étant associée une aiguille du second type avec un décalage dans la direction du mouvement de translation relatif entre ladite tête et lesdites microplaques au cours du traitement de ces dernières, le nombre de paires d'aiguilles des deux types étant égal au nombre de puits par colonne ou par rangée, ou à une fraction de ce nombre, et l'espacement entre deux paires adjacentes d'aiguilles étant égal à l'espacement entre deux puits adjacents de la même colonne ou rangée, ou à un multiple de cet espacement. Un tel dispositif est connu de US-B-5951783.

Des appareils ou postes automatiques de lavage de microplaques équipés d'une telle tête sont également connus et on peut, par exemple, à ce sujet, citer le laveur automatique connu sous la désignation LAVEUR LP40 par la société ADIL INSTRUMENTS.

Ces laveurs et têtes connus sont bien adaptés pour le traitement de microplaques dont les puits reçoivent des échantillons habituels sous forme liquide ou solide dissolvable.

Toutefois, pour le diagnostic néonatal, il existe une technique de prélèvement d'échantillons particulière sur papier buvard. L'échantillon est déposé sur le buvard par prélèvement direct sur le talon du nouveau-né. Cette méthode facilite l'expédition des échantillons vers un laboratoire central d'analyse (envoi dans une enveloppe, pas de tube d'échantillon).

Ce type de test est très répandu en Europe. Pour l'analyse, le laboratoire récupère l'échantillon sanguin à analyser en découpant un ou plusieurs disque(s) de dimension standard dans la feuille de buvard imprégné de sang (0 3,2 mm ou 0 4,5 mm). Les disques échantillon à analyser sont alors déposés dans les puits d'une microplaque. L'ajout d'un tampon (solution de dilution) permet de dissoudre l'échantillon à analyser. Après une incubation prolongée, le disque de papier doit être retiré de la microplaque pour pouvoir continuer l'analyse qualitative. La plaque suit alors un cycle classique de lavage puis de lecture à des fins de diagnostic.

Actuellement, dans les procédés de traitement de microplaques automatisés, il faut deux appareils différents pour effectuer les phases d'extraction des disques et de lavage de la microplaque, ce pour éviter le bouchage du circuit d'aspiration de liquide de l'appareil de lavage.

Ainsi, l'extraction des disques est réalisée par ou sur un extracteur aspirant les disques un par un. Après l'extraction, l'utilisateur vérifie qu'il ne reste aucun disque au fond de la microplaque, puis dépose la microplaque dans le laveur.

Il en résulte un coût et un encombrement importants du fait de la mise en oeuvre de deux appareils différents et un allongement important de la durée de la phase de lavage, les extracteurs actuels fonctionnant avec une seule aiguille (puits par puits) et l'opérateur devant transférer manuellement la microplaque d'un appareil à l'autre.

Une méthode alternative consiste à retourner la microplaque manuellement et à la taper contre une surface plane, ce qui constitue une opération fastidieuse et nécessite une vérification minutieuse de la part de l'opérateur.

Enfin, pour les deux méthodes alternatives d'extraction évoquées ci-dessus, les risques de bouchage des aiguilles d'aspiration de liquide de l'appareil de lavage ne peuvent être totalement écartés, ce qui peut occasionner des interventions de maintenance fréquentes et entraîner un mauvais lavage des puits pouvant fausser les analyses postérieures.

La présente invention a pour but de pallier ou d'éviter les inconvénients précités, tout en ne modifiant pas de manière fondamentale la constitution des têtes de lavage et des laveurs automatiques actuels.

A cet effet, elle a pour principal objet une tête de lavage et d'extraction pour appareil automate de lavage de microplaques, du type précité et caractérisée en ce que ses aiguilles d'aspiration, ainsi que les parties du circuit d'aspiration et/ou de récupération consécutives, présentent un diamètre de section de passage au moins égal à la plus grande dimension transversale des supports d'échantillons, par exemple au diamètre des disques, et en ce que ladite tête comporte ou coopère avec au moins un moyen assurant le maintien de la microplaque à laver ou empêchant son soulèvement, au moins durant la phase d'extraction par aspiration.

L'invention a également pour objet un appareil ou poste automatique de lavage de microplaques d'analyse à puits pouvant contenir des supports d'échantillons en matière fibreuse, lesdites microplaques étant calées dans une position de traitement sur un plateau support mobile en translation dans au moins une direction, appareil ou poste caractérisé en ce qu'il comporte une tête de lavage et d'extraction telle que décrite ci-dessus.

L'invention sera mieux comprise, grâce à la description ci-après, qui se rapporte à des modes et des variantes de réalisation préférés, donnés à titre d'exemples non limitatifs, et expliqués avec référence aux dessins schématiques annexés, dans lesquels :
la figure 1 est une vue en perspective d'un mode de réalisation préféré en deux parties de la tête de lavage selon l'invention, pourvu de moyen de maintien de la microplaque selon une variante de réalisation de l'invention. ;
la figure 2 est une vue en coupe et en élévation transversale de la microplaque et du collecteur faisant partie de la tête de lavage représentée sur la figure 1 ;
les figures 3A et 3B sont des vues en élévation latérales, à une échelle différente, de la tête de lavage représentée sur la figure 1, respectivement en position rétractée et en position déployée avec introduction des aiguilles d'aspiration dans une rangée ou une colonne de puits ;
la figure 4 est une représentation schématique des circuits fluidiques reliés à la tête de lavage et d'extraction selon l'invention montrant diverses variantes de moyen de réduction / régulation de la force d'aspiration, et,
les figures 5 à 7 représentent, en élévation latérale et à une échelle différente, une aiguille d'aspiration faisant partie d'une tête de lavage et d'extraction selon différentes variantes de réalisation de l'invention.

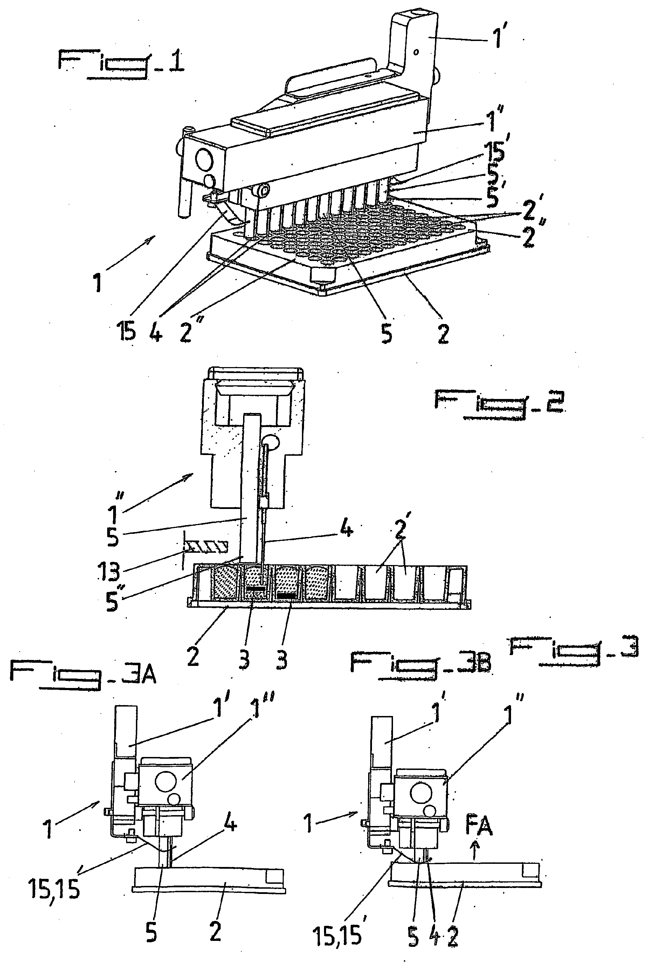

Comme le montrent les figures 1 à 7 des dessins annexés, la tête 1 de lavage et d'extraction est mobile au-dessus de la ou des microplaque(s) 2 en position de traitement et comprend un alignement d'aiguilles ou de tubulures de distribution 4 reliées à un circuit 4' d'alimentation en liquide(s) de lavage et/ou de rinçage et un alignement d'aiguilles ou de tubulures d'aspiration 5 reliées à un circuit 5' d'évacuation et/ou de récupération, à chaque aiguille 4 du premier type étant associée une aiguille 5 du second type avec un décalage dans la direction du mouvement de translation relatif entre ladite tête 1 et lesdites microplaques 2 au cours du traitement de ces dernières, le nombre de paires d'aiguilles 4 et 5 des deux types étant égal au nombre de puits 2' par colonne ou par rangée, ou à une fraction de ce nombre, et l'espacement entre deux paires 4 et 5 adjacentes d'aiguilles étant égal à l'espacement, ou à un multiple de l'espacement, entre deux puits 2' adjacents de la même colonne ou rangée.

Chaque microplaque 2 comprend une pluralité de puits d'analyse 2' ouverts dans leur partie supérieure et arrangés selon une disposition matricielle à rangées et colonnes perpendiculaires entre-elles, lesdits puits 2' étant notamment destinés à recevoir des supports d'échantillons 3 en matière fibreuse de taille déterminée, en particulier de forme discoïdale.

Le circuit d'alimentation 4' comporte une pompe 4" de circulation de solutions de lavage et de rinçage prélevées dans des bouteilles correspondantes 4"' et distribuées aux aiguilles 4 à travers une vanne 4"" de commande d'alimentation.

Le circuit d'évacuation et/ou de récupération 5' comprend une source de vide 5"' contrôlée (par exemple une pompe à vide à haut débit) apte à créer une dépression au niveau des aiguilles 5 à travers (montage en barboteuse) au moins une bouteille 5"", préférentiellement deux montées en série, de récupération des déchets (solutions + disques).

Conformément à l'invention, les aiguilles d'aspiration 5, ainsi que les parties du circuit 5' d'aspiration et/ou de récupération consécutives, présentent un diamètre de section de passage au moins égal à la plus grande dimension transversale des supports d'échantillons 3, par exemple au moins égal au diamètre des disques, et ladite tête 1 comporte ou coopère avec au moins un moyen 6 ; 7 ; 8 ; 9 ; 10 ; 11 ; 12 ; 13 ; 14, 14' ; 15, 15' assurant le maintien de la microplaque 2 à laver ou empêchant son soulèvement ou déplacement, de manière contrôlée, au moins durant la phase d'extraction par aspiration.

Compte tenu de l'intensité de la force de succion générée, liée au débit d'aspiration important au niveau des aiguilles d'aspiration 5 et à la nature du contact entre lesdites aiguilles et les parois des puits 2', ladite microplaque 2 se trouverait soulevée, durant la phase d'aspiration et/ou de remontée de la tête 1, en l'absence de tels moyens de compensation adéquats.

Ces moyens de compensation pourront avoir une action permanente pendant toute la durée de la phase de traitement ou une action limitée dans le temps et synchronisée avec l'aspiration.

Pour procéder à l'extraction des disques 3 ou de l'amas fibreux restant après trempage prolongé, les aiguilles 5 sont descendues rapidement dans les puits 2' de la microplaque 2. Le débit d'air généré par la pompe à vide 5"' dans les aiguilles 5 va permettre l'évacuation du liquide contenu dans les puits 2' et dans le même temps l'évacuation des disques 3 ou amas contenus dans le liquide de lavage. Le liquide et les disques se retrouvent piégés dans la première des bouteilles poubelles 5"" montées en série dans le circuit 5'.

Selon une première variante de réalisation générale de l'invention, représentée notamment aux figures 2 à 7 des dessins annexés, le moyen empêchant le soulèvement des microplaques 2 est constitué par un moyen ou un ensemble de moyens coopérant 6 ; 7 ; 8 ; 9 ; 10 ; 11; 12 ; 13 ; 14, 14' réduisant ou régulant la force d'aspiration des aiguilles d'aspiration 5, individuellement, collectivement ou pour certaines seulement desdites aiguilles 5.

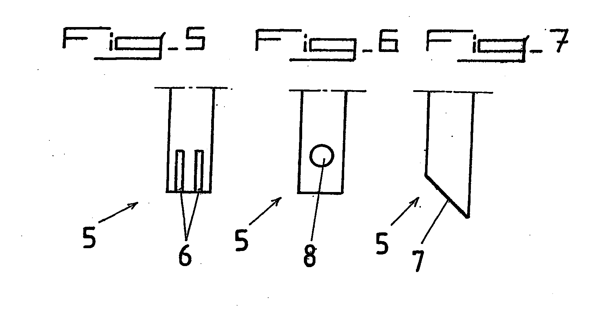

Comme le montrent les figures 5 à 7 des dessins annexés, le moyen réduisant individuellement la force d'aspiration des aiguilles d'aspiration 5 peut consister en une configuration physique spécifique desdites aiguilles 5 fournissant une fuite parasite lors de l'aspiration, telle qu'une extrémité libre 5" de corps d'aiguille 5 pourvue d'au moins une fente 6, une extrémité d'aiguille en biseau 7 ou encore un corps d'aiguille pourvu d'au moins une perforation radiale 8 calibrée.

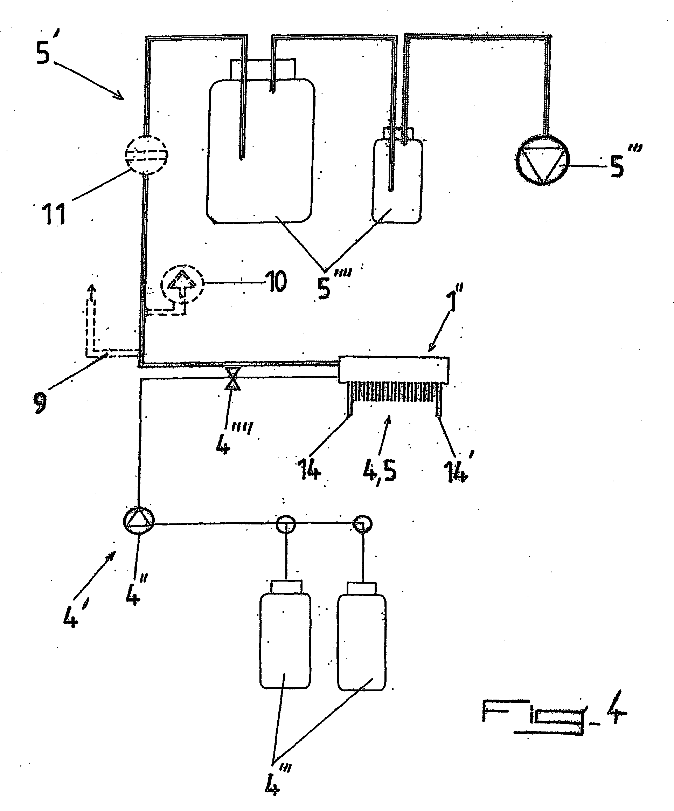

Le moyen réduisant collectivement la force d'aspiration des aiguilles d'aspiration 5 pourra également consister (voir figure 4) en un moyen de régulation de la force d'aspiration au niveau du circuit 5' d'évacuation et/ou de récupération, tel qu'une fuite calibrée 9, un clapet 10 limitateur de dépression ou une électrovanne 11 de coupure temporaire du flux d'aspiration.

La fuite calibrée 9, éventuellement également contrôlée par une vanne, pourra le cas échéant être directement ménagée dans la tête 1.

Conformément à une forme particulière de la première variante de réalisation de l'invention, le moyen réduisant collectivement, ou pour certaines, la force d'aspiration des aiguilles d'aspiration 5 peut consister en un moyen 13 ; 14, 14' limiteur de la profondeur d'introduction d'au moins certaines aiguilles 5 dans les puits 2', empêchant notamment le contact d'au moins certaines aiguilles 5 avec les fonds ou les parois latérales des puits 2' correspondants.

Ce moyen limiteur pourra, par exemple, se présenter sous la forme d'une butée 13, physique ou électronique, c'est-à-dire un capteur de position ou de déplacement dont la mesure est évaluée par l'unité de contrôle et de gestion commandant le fonctionnement du laveur (cf. figure 2).

Comme le montre la figure 4 des dessins annexés, le moyen limiteur peut aussi se présenter sous la forme d'au moins une aiguille d'aspiration 5, préférentiellement deux aiguilles 14, 14' situées aux extrémités opposées de l'alignement d'aiguilles d'aspiration 5, présentant une longueur supérieure aux autres aiguilles 5 et saillantes par rapport à ces dernières.

Au cours de la descente de l'alignement d'aiguilles 5 dans les puits 2', les aiguilles 14, 14' serviront ainsi de butées embarquées, bloquant les autres aiguilles 5 à une distance définie des fonds de leurs puits 2' respectifs.

Selon une autre forme particulière de la première variante de réalisation de l'invention, non représentée aux dessins annexés, le moyen réduisant collectivement la force d'aspiration des aiguilles 5 peut consister en un séquenceur n'autorisant, de manière alternative, une aspiration sumultanée qu'au niveau d'un groupe fractionnaire de l'ensemble des aiguilles 5, les aiguilles 5 des différents groupes étant préférentiellement réparties de manière uniforme dans l'alignement.

Conformément à une seconde variante de réalisation générale de l'invention, le moyen assurant le maintien de la microplaque 2 à traiter consiste en un moyen ou un ensemble de moyens exerçant une force de poussée 15, 15' ou de traction dans une direction opposée à la direction de la force d'aspiration FA produite par les aiguilles 5, au moins durant les phases d'aspiration et de début de retrait ou de rétraction desdites aiguilles d'aspiration 5 en vue de leur extraction des puits 2' traités.

Selon une forme particulière de cette seconde variante de réalisation générale, l'ensemble de moyens exerçant une force de poussée temporaire sur la microplaque 2 à traiter peut consister en des moyens compliants passifs 15, 15' ou actifs portés par la tête 1 de lavage et d'extraction et venant en appui sur la microplaque 2 sur des bords ou zones de bord opposé(e)s 2" de cette dernière, en dehors de la zone occupée sur les puits 2'.

Les moyens compliants actifs peuvent, par exemple, être constitués par une paire d'actionneurs commandés en synchronisme avec le déplacement de la tête de lavage et d'extraction 1 (non représentés).

Les moyens compliants passifs peuvent, quant à eux, se présenter sous la forme d'une paire d'éléments 15, 15' élastiquement déformables tels que des lames ressort ou des ressorts hélicoïdaux, éventuellement pourvus de patins d'appui.

En relation avec un mode de réalisation particulièrement préféré de l'invention, représenté aux figures 1 à 3 des dessins annexés, la tête 1 est composée d'un support 1' mobile de manière contrôlée dans une direction perpendiculaire au plan de la microplaque 2 en position de traitement et d'un corps creux 1" formant collecteur, portant les aiguilles de distribution 4 et d'aspiration 5 et assurant leur connexion à leurs circuits fluidiques 4' et 5' respectifs, ledit collecteur 1" étant monté sur ou dans le support mobile 1' avec blocage dans un plan parallèle au plan de la microplaque 2 en position de traitement et avec faculté de translation relative dans la direction perpendiculaire audit plan, à partir d'une position basse de soutien, l'ensemble de moyens de maintien temporaire des microplaques 2 se présentant sous la forme de deux ressorts à lame 15, 15' en forme de S ou de Z applatis, fixés sur le support mobile 1' et venant en appui sur des zones de bord 2" de la microplaque 2 à traiter avec une force d'appui au moins égale à la force d'aspiration collective des aiguilles d'aspiration 5 avant que lesdites aiguilles 5 n'arrivent dans leur position d'introduction maximale dans les puits 2' et restant en appui au moins jusqu'à ce que lesdites aiguilles d'aspiration 5 aient quitté ladite position d'introduction maximale, préférentiellement jusqu'à ce qu'elles soient entièrement extraites de leurs puits 2' respectifs.

Une telle construction de tête de lavage, dépourvue des aiguilles d'extraction 5 et des moyens élastiques 15, 15', est déjà connue par la société ADIL INSTRUMENTS sous la désignation "MANIFOLD LP40 AVEC SUPPORT"

Lors de la descente de la tête 1, on observe un déplacement simultané vers le bas du support 1' et du collecteur 1" jusqu'à ce que les aiguilles d'aspiration 5 viennent en appui sur les fonds ou sur les parois latérales des puits 2' d'une rangée ou d'une colonne de la microplaque 2.

Le support 1' pourra poursuivre davantage son mouvement de descente, sans soutenir ou entraîner le collecteur 1", ce dernier reposant alors de son propre poids dans les puits 2'.

Après achèvement de la phase d'extraction, le support 1' entame son mouvement ascendant et soulève, après que le corps du collecteur 1" soit venu en application sur une butée du support 1', ledit collecteur 1" jusqu'à ce que les aiguilles 4 et 5 soient complètement extraites des puits 2' avec leurs extrémités libres inférieures situées au-dessus de la surface supérieure de la microplaque 2 en position de traitement.

Selon une autre forme particulière de la seconde variante de réalisation de l'invention, non représentée au dessins annexés, le moyen exerçant une force de traction sur la microplaque 2 peut être formé par un moyen d'aspiration créant un effet de succion ou effet ventouse, au moins temporaire, sous la microplaque 2 à traiter, tel qu'un plateau support perforé au niveau de la zone de réception des microplaques 2 et soumis à une dépression appliquée de manière sous-jacente.

Enfin, conformément à une troisième variante de réalisation générale de l'invention, non représentée aux dessins annexés, le moyen assurant le maintien de la microplaque 2 à traiter peut consister en un dispositif de calage et de serrage latéral, éventuellement associé à une pièce fixe ou escamotable de venue en prise ou d'engagement latéral(e).

Cette troisième variante pourra, par exemple, être implémentée par une augmentation de l'effort de plaquage de la lame de positionnement actuelle de la microplaque 2 (pour réaliser un maintien par serrage latéral), par un maintien par adhérence (augmentation de l'adhérence entre lame et microplaque) ou par une rétention verticale de la microplaque par des éléments de maintien fixes (conjugaison de formes) ou escamotables faisant partie du support ou plateau recevant lesdites microplaques ou faisant partie d'un autre sous-ensemble mécanique de l'appareil de lavage.

Bien que décrite ci-dessus comme des réalisations indépendantes, l'homme du métier comprendra aisément qu'il peut être également prévu de combiner ou d'associer deux ou plus des différentes variantes de réalisation du ou des moyens de maintien ou d'inhibition du soulèvement de la microplaque 2, éventuellement différentes formes de réalisation d'une même variante précitée.

La tête de lavage et d'extraction 1 permet donc de fournir de nombreux avantages par rapport à l'état de la technique actuel, à savoir, absence de risque de bouchage (notamment en affectant plusieurs passes de lavage / extraction), rapidité de fonctionnement (traitement par rangée ou colonne), absence d'intervention manuelle entre les phases d'extraction des disques 3 et de lavage, faible encombrement (pratiquement pas d'encombrement supplémentaire par rapport à une tête de lavage classique) et coût avantageux par rapport à deux têtes montées dans deux appareils différents (une pour l'extraction et une pour le lavage).

La présente invention a également pour objet un appareil ou poste automatique de lavage de microplaques d'analyse à puits pouvant contenir des supports d'échantillons en matière fibreuse, lesdites microplaques étant calées dans une position de traitement sur un plateau support mobile en translation dans au moins une direction, appareil ou poste caractérisé en ce qu'il comporte une tête de lavage et d'extraction telle que décrite ci-dessus.

Bien entendu, l'invention n'est pas limitée variantes de réalisation décrites et représentées aux dessins annexés. Des modifications restent possibles, notamment du point de vue de la constitution des divers éléments ou par substitution d'équivalents techniques, sans sortir pour autant du domaine de protection de l'invention.

## Revendications

1. Tête de lavage et d'extraction pour appareil ou automate de lavage de microplaques, de forme rectangulaire ou carrée, comprenant une pluralité de puits d'analyse ouverts dans leur partie supérieure et arrangés selon une disposition matricielle à rangées et colonnes perpendiculaires entre-elles, lesdits puits étant notamment destinés à recevoir des supports d'échantillons en matière fibreuse de taille déterminée, de forme discoïdale, ladite tête étant mobile au-dessus de la ou des microplaque(s) en position de traitement et comprenant un alignement d'aiguilles ou de tubulures de distribution reliées à un circuit d'alimentation en liquide(s) de lavage et/ou de rinçage et un alignement d'aiguilles ou de tubulures d'aspiration reliées à un circuit d'évacuation et/ou de récupération, à chaque aiguille du premier type étant associée une aiguille du second type avec un décalage dans la direction du mouvement de translation relatif entre ladite tête et lesdites microplaques au cours du traitement de ces dernières, le nombre de paires d'aiguilles des deux types étant égal au nombre de puits par colonne ou par rangée, ou à une fraction de ce nombre, et l'espacement entre deux paires adjacentes d'aiguilles étant égal à l'espacement entre deux puits adjacents de la même colonne ou rangée, ou à un multiple de cet espacement, **caractérisée en ce que** les aiguilles d'aspiration (5), ainsi que les parties du circuit (5') d'aspiration et/ou de récupération consécutives, présentent un diamètre de section de passage au moins égal à la plus grande dimension transversale des supports d'échantillons (3), soit au diamètre des disques, et **en ce que** ladite tête (1) comporte ou coopère avec au moins un moyen assurant le maintien de la microplaque (2) à laver ou empêchant son soulèvement, au moins durant la phase d'extraction par aspiration.

2. Tête selon la revendication 1, **caractérisée en ce que** le moyen empêchant le soulèvement des microplaques (2) est constitué par un moyen ou un ensemble de moyens coopérant (6 ; 7 ; 8 ; 9 ; 10 ; 11 ; 12 ; 13 ; 14, 14') réduisant ou régulant la force d'aspiration des aiguilles d'aspiration (5), individuellement, collectivement ou pour certaines seulement desdites aiguilles (5).

3. Tête selon la revendication 2, **caractérisée en ce que** le moyen réduisant individuellement la force d'aspiration des aiguilles d'aspiration (5) consiste en une configuration physique spécifique desdites aiguilles (5) fournissant une fuite parasite lors de l'aspiration, telle qu'une extrémité libre (5") de corps d'aiguille (5) pourvue d'au moins une fente (6), une extrémité d'aiguille en biseau (7) ou un corps d'aiguille pourvu d'au moins une perforation radiale (8) calibrée.

4. Tête selon la revendication 2, **caractérisée en ce que** le moyen réduisant collectivement la force d'aspiration des aiguilles d'aspiration (5) consiste en un moyen de régulation de la force d'aspiration au niveau du circuit (5') d'évacuation et/ou de récupération, tel qu'une fuite calibrée (9), un clapet (10) limitateur de dépression ou une électrovanne (11) de coupure temporaire du flux d'aspiration.

5. Tête selon la revendication 2, **caractérisée en ce que** le moyen réduisant collectivement, ou pour certaines, la force d'aspiration des aiguilles d'aspiration (5) consiste en un moyen (13 ; 14, 14') limiteur de la profondeur d'introduction d'au moins certaines aiguilles (5) dans les puits (2'), empêchant notamment le contact d'au moins certaines aiguilles (5) avec les fonds ou les parois latérales des puits (2') correspondants.

6. Tête selon la revendication 5, **caractérisée en ce que** le moyen limiteur se présente sous la forme d'une butée (13), physique ou électronique.

7. Tête selon la revendication 5, **caractérisée en ce que** le moyen limiteur se présente sous la forme d'au moins une aiguille d'aspiration (5), préférentiellement deux (14, 14') situées aux extrémités opposées de l'alignement d'aiguilles d'aspiration (5), présentant une longueur supérieure aux autres aiguilles (5) et saillantes par rapport à ces dernières.

8. Tête selon la revendication 2, **caractérisée en ce que** le moyen réduisant collectivement la force d'aspiration des aiguilles (5) consiste en un séquenceur n'autorisant, de manière alternative, une aspiration simultanée qu'au niveau d'un groupe fractionnaire de l'ensemble des aiguilles (5), préférentiellement réparties de manière uniforme dans l'alignement.

9. Tête selon la revendication 1, **caractérisée en ce que** le moyen assurant le maintien de la microplaque (2) à traiter consiste en un moyen ou un ensemble de moyens exerçant une force de poussée (15, 15') ou de traction dans une direction opposée à la direction de la force d'aspiration (FA) produite par les aiguilles (5), au moins durant les phases d'aspiration et de début de retrait ou de rétraction desdites aiguilles d'aspiration (5) en vue de leur extraction des puits (2') traités.

10. Tête selon la revendication 9, **caractérisée en ce que** l'ensemble de moyens exerçant une force de poussée temporaire sur la microplaque (2) à traiter consiste en des moyens compliants passifs (15, 15') ou actifs portés par la tête (1) de lavage et d'extraction et venant en appui sur la microplaque (2) sur des bords ou zones de bord opposé(e)s (2") de cette dernière, en dehors de la zone occupée sur les puits (2').

11. Tête selon la revendication 10, **caractérisée en ce que** les moyens compliants actifs sont constitués par une paire d'actionneurs commandés en synchronisme avec le déplacement de la tête de lavage et d'extraction (1).

12. Tête selon la revendication 10, **caractérisée en ce que** les moyens compliants passifs se présentent sous la forme d'une paire d'éléments (15, 15') élastiquement déformables tels que des lames ressort ou des ressorts hélicoïdaux, éventuellement pourvus de patins d'appui.

13. Tête selon l'une quelconque des revendications 10 et 12, **caractérisée en ce qu'**elle est composée d'un support (1') mobile de manière contrôlée dans une direction perpendiculaire au plan de la microplaque (2) en position de traitement et d'un corps creux (1") formant collecteur, portant les aiguilles de distribution (4) et d'aspiration (5) et assurant leur connexion à leurs circuits fluidiques (4' et 5') respectifs, ledit collecteur (1") étant monté sur ou dans le support mobile (1') avec blocage dans un plan parallèle au plan de la microplaque (2) en position de traitement et avec faculté de translation relative dans la direction perpendiculaire audit plan, à partir d'une position basse de soutien, l'ensemble de moyens de maintien temporaire des microplaques (2) se présentant sous la forme de deux ressorts à lame (15, 15') en forme de S ou de Z applatis, fixés sur le support mobile (1') et venant en appui sur des zones de bord (2") de la microplaque (2) à traiter avec une force d'appui au moins égale à la force d'aspiration collective des aiguilles d'aspiration (5) avant que lesdites aiguilles (5) n'arrivent dans leur position d'introduction maximale dans les puits (2') et restant en appui au moins jusqu'à ce que lesdites aiguilles d'aspiration (5) aient quitté ladite position d'introduction maximale, préférentiellement jusqu'à ce qu'elles soient entièrement extraites de leurs puits (2') respectifs.

14. Tête selon la revendication 9, **caractérisé en ce que** le moyen exerçant une force de traction sur la microplaque (2) est formé par un moyen d'aspiration créant un effet de succion ou effet ventouse, au moins temporaire, sous la microplaque (2) à traiter.

15. Tête selon la revendication 1, **caractérisée en ce que** le moyen assurant le maintien de la microplaque (2) à traiter consiste en un dispositif de calage et de serrage latéral, éventuellement associé à une pièce fixe ou escamotable de venue en prise ou d'engagement latéral(e).

16. Appareil ou poste automatique de lavage de microplaques d'analyse à puits pouvant contenir des supports d'échantillons en matière fibreuse, lesdites microplaques étant calées dans une position de traitement sur un plateau support mobile en translation dans au moins une direction, appareil ou poste **caractérisé en ce qu'**il comporte une tête de lavage et d'extraction selon l'une quelconque des revendications 1 à 15.

## Claims

1. Washing and extraction head for an apparatus or automaton for washing rectangular or square microplates, comprising a plurality of analysis wells, which are open at the top and arranged in a matrix of perpendicular rows and columns, said wells being designed in particular to hold racks of samples of fibrous material of predetermined size and disc-like in shape, said head being movable above the microplate or microplates in treatment position and comprising an alignment of distribution needles or tubes connected to a circuit for supplying washing and/or rinsing liquid and an alignment of suction needles or tubes connected to an evacuation and/or recovery circuit, each needle of the first type being associated with a needle of the second type with a displacement in the direction of movement of relative translation between the said head and said microplates during the treatment of the latter, the number of pairs of needles of the two types being equal to the number of wells per column or row, or to a fraction of this number, and the spacing between two adjacent pairs of needles being equal to the spacing between two adjacent wells of the same column or row, or to a multiple of this spacing, **characterised in that** the suction needles (5), as well as parts of the consecutive suction and/or recovery circuit (5'), have a cross-sectional through diameter which is at least equal to the greatest transverse dimension of the sample racks (3) or to the diameter of the discs, and **in that** said head (1) comprises or cooperates with at least one means which ensures the support of the microplate (2) to be washed or prevents it lifting up, at least during the phase of extraction by suction.

2. Head according to claim 1, **characterised in that** the means for preventing the lifting up of the microplates (2) is formed by a means or an assembly of cooperating means (6; 7; 8; 9; 10; 11; 12; 13; 14, 14') which reduce or regulate the suction force of the suction needles (5), individually, collectively or for only some of the said needles (5).

3. Head according to claim 2, **characterised in that** the means which individually reduces the suction force of the suction needles (5) consists of a specific physical configuration of said needles (5) providing a parasitic leak during suction, such as one free end (5") of the needle body (5) being provided with at least one slot (6), a bevelled needle end (7), or a needle body provided with at least one calibrated radial perforation (8).

4. Head according to claim 2, **characterised in that** the means for collectively reducing the suction force of the suction needles (5) consists of a means for controlling the suction force at the level of the evacuation and/or recovery circuit (5'), such as a calibrated leak (9), a vacuum-limiting valve (10) or an electro-valve (11) for temporarily cutting off the suction flow.

5. Head according to claim 2, **characterised in that** the means for reducing collectively or for some the suction force of the suction needles (5) consists of a means (13; 14, 14') for limiting the depth of introduction of at least some of the needles (5) into the wells (2'), in particular preventing the contact of at least some of the needles (5) with the bottom or side walls of the corresponding wells (2').

6. Head according to claim 5, **characterised in that** the limiting means is in the form of a physical or electronic abutment (13).

7. Head according to claim 5, **characterised in that** the limiting means is in the form of at least one suction needle (5), preferably two (14, 14'), arranged at opposite ends of the alignment of suction needles (5), with a greater length than the other needles (5) and projecting in relation to the latter.

8. Head according to claim 2, **characterised in that** the means for collectively reducing the suction force of the needles (5) consists of a sequencer which only permits, in an alternative manner, simultaneous suction at the level of a fractional group of the assembly of needles (5), preferably distributed uniformly along the alignment.

9. Head according to claim 1, **characterised in that** the means for ensuring the support of the microplate (2) to be treated consists of a means or an assembly of means which exerts a pressure or traction force (15, 15') in a direction opposite to the direction of the suction force (FA) produced by the needles (5), at least during the suction phases and at the beginning of withdrawal or retraction of said suction needles (5) for their removal from the treated wells (2').

10. Head according to claim 9, **characterised in that** the assembly of means exerting a temporary pressure force on the microplate (2) to be treated consists of passive compliant means (15, 15') or active compliant means carried by the washing and extraction head (1) and bearing against the microplate (2) on its edges or opposite edge regions (2") of the latter, outside the region occupied by the wells (2').

11. Head according to claim 10, **characterised in that** the active compliant means consists of a pair of actuators controlled synchronously with the movement of the washing and extraction head (1).

12. Head according to claim 10, **characterised in that** the passive compliant means is in the form of a pair of resiliently deformable elements (15, 15') such as leaf springs or helicoidal springs, possibly provided with bearing blocks.

13. Head according to any one of claims 10 and 12, **characterised in that** it consists of a support (1') which can be moved in a controlled manner in a direction perpendicular to the plane of the microplate (2) in treatment position and a hollow body (1") which forms a collector, carrying the distribution needles (4) and suction needles (5) and ensuring their connection to respective fluid circuits (4' and 5'), said collector (1") being mounted on or in the movable support (1') with fixing in a plane parallel to the plane of the microplate (2) in the treatment position and with the ability of relative translation in the direction perpendicular to said plane, from a low holding position, the assembly of temporary holding means for the microplates (2) being in the form of two leaf springs (15, 15') in the form of a flattened S or Z, fixed onto the movable support (1') and bearing against the edge regions (2") of the microplate (2) to be treated with a bearing force at least equal to the collective suction force of the suction needles (5) before said needles (5) reach their position of maximum introduction into the wells (2') and remaining in bearing position at least until said suction needles (5) have left said maximum introduction position, preferably until they are entirely withdrawn from their respective wells (2').

14. Head according to claim 9, **characterised in that** the means for exerting a traction force on the microplate (2) is formed by a suction means which provides a suction or vacuum effect, at least temporarily, under the microplate (2) to be treated.

15. Head according to claim 1, **characterised in that** the means for ensuring the support of the microplate (2) to be treated consists of a fixing and lateral clamping device, possibly connected to a fixed or retractable piece to come into gripping or lateral engagement.

16. Apparatus or automatic station for washing analysis microplates with wells that can contain racks of samples of a fibrous material, said microplates being fixed in a treatment position on a support plate which moves in translation in at least one direction, apparatus or station, **characterised in that** it comprises a washing and extraction head according to any one of claims 1 to 15.

## Patentansprüche

1. Wasch- und Entnahmekopf für ein Waschgerät oder einen Waschautomat von Mikroplatten rechteckiger oder quadratischer Form, die mehrere Analyseschächte aufweisen, welche in ihrem oberen Bereich offen und in einer Matrixanordnung in zueinander lotrechten Reihen und Spalten angeordnet sind, wobei die Schächte insbesondere dazu bestimmt sind, scheibenförmige Probenträger aus Fasermaterial bestimmter Größe aufzunehmen, wobei der Kopf oberhalb der Mikroplatte(n) in der Behandlungsstellung beweglich ist und eine fluchtende Anordnung von Verteilungsnadeln oder -stutzen, die mit einem Wasch- und/oder Spülflüssigkeits-Zufuhrkreislauf verbunden sind, und eine fluchtende Anordnung von Ansaugnadeln oder -stutzen aufweist, die mit einem Entleerungs- und/oder Wiedergewinnungskreislauf verbunden sind, wobei jeder Nadel des ersten Typs eine Nadel des zweiten Typs zugeordnet ist, mit einer Verschiebung in Richtung der relativen Translationsbewegung zwischen dem Kopf und den Mikroplatten während der Behandlung dieser letzteren, wobei die Anzahl von Nadelpaaren der zwei Typen gleich der Anzahl von Schächten pro Spalte oder pro Reihe oder einem Bruchteil dieser Anzahl ist, und der Abstand zwischen zwei benachbarten Nadelpaaren gleich dem Abstand zwischen zwei benachbarten Schächten der gleichen Spalte oder Reihe oder einem Vielfachen dieses Abstands ist, **dadurch gekennzeichnet, dass** die Ansaugnadeln (5) sowie die darauf folgenden Bereiche des Ansaug- und/oder Wiedergewinnungskreislaufs (5') einen Durchgangsquerschnitt-Durchmesser mindestens gleich der größten Querabmessung der Probenträger (3), d.h. dem Durchmesser der Scheiben, haben, und dass der Kopf (1) mindestens ein Mittel aufweist oder damit zusammenwirkt, das den Halt der zu waschenden Mikroplatte (2) gewährleistet oder ihr Anheben verhindert, zumindest während der Entnahmephase durch Ansaugen.

2. Kopf nach Anspruch 1, **dadurch gekennzeichnet, dass** das Mittel, das das Anheben der Mikroplatten (2) verhindert, aus einem Mittel oder eine Gruppe von zusammenwirkenden Mitteln (6; 7; 8; 9; 10; 11; 12; 13; 14, 14') besteht, das (die) die Ansaugkraft der Ansaugnadeln (5) einzeln, kollektiv oder nur für einige der Nadeln (5) reduziert oder reguliert.

3. Kopf nach Anspruch 2, **dadurch gekennzeichnet, dass** das das die Saugkraft der Ansaugnadeln (5) einzeln reduzierende Mittel aus einer spezifischen physikalischen Konfiguration der Nadeln (5) besteht, die ein parasitäres Leck beim Ansaugen liefert, wie ein freies Ende (5") eines Nadelkörpers (5), das mit mindestens einem Schlitz (6) versehen ist, ein schräges Nadelende (7), oder ein Nadelkörper, der mit mindestens einer kalibrierten radialen Lochung (8) versehen ist.

4. Kopf nach Anspruch 2, **dadurch gekennzeichnet, dass** das die Ansaugkraft der Ansaugnadeln (5) kollektiv reduzierende Mittel aus einem Mittel zur Regulierung der Saugkraft in Höhe des Entleerungs- und/oder Wiedergewinnungskreislaufs (5') besteht, wie einem kalibrierten Leck (9), einer Unterdruckbegrenzungsklappe (10) oder einem Elektroventil (11) zur vorübergehenden Unterbrechung des Ansaugstroms.

5. Kopf nach Anspruch 2, **dadurch gekennzeichnet, dass** das kollektiv oder für bestimmte Nadeln die Ansaugkraft der Ansaugnadeln (5) reduzierende Mittel aus einem die Einführtiefe zumindest bestimmter Nadeln (5) in die Schächte (2') begrenzenden Mittel (13; 14, 14') besteht, das insbesondere den Kontakt zumindest bestimmter Nadeln (5) mit den Böden oder Seitenwänden der entsprechenden Schächte (2') verhindert.

6. Kopf nach Anspruch 5, **dadurch gekennzeichnet, dass** das Begrenzungsmittel in Form eines physikalischen oder elektronischen Anschlags (13) vorliegt.

7. Kopf nach Anspruch 5, **dadurch gekennzeichnet, dass** das Begrenzungsmittel in Form mindestens einer Ansaugnadel (5), vorzugsweise zwei sich an den gegenüberliegenden Enden der fluchtenden Anordnung von Ansaugnadeln (5) befindenden Ansaugnadeln (14, 14') vorliegt, die eine größere Länge als die anderen Nadeln (5) haben und bezüglich dieser letzteren vorstehen.

8. Kopf nach Anspruch 2, **dadurch gekennzeichnet, dass** das die Ansaugkraft der Nadeln (5) kollektiv reduzierende Mittel aus einer Ablaufsteuerung besteht, die alternativ eine gleichzeitige Ansaugung nur in Höhe einer Teilgruppe der Gesamtheit der Nadeln (5) erlaubt, die vorzugsweise gleichmäßig in der fluchtenden Anordnung verteilt sind.

9. Kopf nach Anspruch 1, **dadurch gekennzeichnet, dass** das den Halt der zu behandelnden Mikroplatte (2) gewährleistende Mittel aus einem Mittel oder einer Gruppe von Mitteln (15, 15') besteht, die eine Schub- oder Zugkraft in eine Gegenrichtung zur Richtung der von den Nadeln (5) erzeugten Ansaugkraft (FA) ausüben, zumindest während der Phasen des Ansaugens und des Beginns des Zurückziehens oder des Einziehens der Ansaugnadeln (5) zum Zweck ihrer Entnahme aus den behandelten Schächten (2') .

10. Kopf nach Anspruch 9, **dadurch gekennzeichnet, dass** die Gruppe der Mittel, die eine vorübergehende Schubkraft auf die zu behandelnde Mikroplatte (2) ausüben, aus nachgiebigen passiven oder aktiven Mitteln (15, 15') besteht, die vom Wasch- oder Entnahmekopf (1) getragen werden und auf der Mikroplatte (2) an gegenüberliegenden Rändern oder Randzonen (2") dieser letzteren außerhalb der besetzten Zone auf den Schächten (2') aufliegen.

11. Kopf nach Anspruch 10, **dadurch gekennzeichnet, dass** die aktiven nachgiebigen Mittel aus einem Paar von Stellgliedern bestehen, die synchron mit dem Verschieben des Wasch- und Entnahmekopfs (1) gesteuert werden.

12. Kopf nach Anspruch 10, **dadurch gekennzeichnet, dass** die passiven nachgiebigen Mittel in Form eines Paars von elastisch verformbaren Elementen (15, 15') wie Blattfedern oder Schraubenfedern vorliegen, die ggf. mit Auflagegleitern versehen sind.

13. Kopf nach einem der Ansprüche 10 und 12, **dadurch gekennzeichnet, dass** er aus einem in einer Richtung lotrecht zur Ebene der Mikroplatte (2) in der Behandlungsstellung kontrolliert beweglichen Träger (1') und aus einem eine Sammeleinrichtung bildenden Hohlkörper (1") besteht, der die Ausgabe- (4) und Ansaugnadeln (5) trägt und ihre Verbindung mit ihren jeweiligen fluidischen Kreisläufen (4' und 5') gewährleistet, wobei die Sammeleinrichtung (1") auf oder in den beweglichen Träger (1') mit Blockierung in einer Ebene parallel zur Ebene der Mikroplatte (2) in der Behandlungsstellung und mit der Möglichkeit der relativen Translationsverschiebung in der Richtung lotrecht zu der Ebene montiert ist, ausgehend von einer niederen Stützstellung, wobei die Gruppe von Mitteln zum vorübergehenden Halt der Mikroplatten (2) in Form von zwei Blattfedern (15, 15') in Form eines abgeflachten S oder Z vorliegt, die am beweglichen Träger (1') befestigt sind und sich auf Randzonen (2") der zu behandelnden Mikroplatte (2) mit einer Auflagekraft mindestens gleich der kollektiven Ansaugkraft der Ansaugnadeln (5) auflegen, ehe die Nadeln (5) in ihrer Stellung des maximalen Einführens in die Schächte (2') ankommen, und zumindest in Auflage bleiben, bis die Ansaugnadeln (5) die Stellung des maximalen Einführens verlassen haben, vorzugsweise, bis sie vollständig aus ihren jeweiligen Schächten (2') entnommen sind.

14. Kopf nach Anspruch 9, **dadurch gekennzeichnet, dass** das eine Zugkraft auf die Mikroplatte (2) ausübende Mittel von einem Ansaugmittel gebildet wird, das eine zumindest vorübergehende Saugwirkung oder Saugnapfwirkung unter der zu behandelnden Mikroplatte (2) erzeugt.

15. Kopf nach Anspruch 1, **dadurch gekennzeichnet, dass** das den Halt der zu behandelnden Mikroplatte (2) gewährleistende Mittel aus einer Vorrichtung zum Verkeilen und seitlichen Einspannen besteht, ggf. einem ortsfesten oder einziehbaren Bauteil mit seitlichem Eingriff oder Einstecken zugeordnet.

16. Automatische(s) Waschgerät oder -station von Analyse-Mikroplatten mit Schacht, die Probenträger aus faserförmigem Werkstoff enthalten können, wobei die Mikroplatten in einer Behandlungsstellung auf einer in mindestens einer Richtung translationsbeweglichen Trägerplatte verkeilt sind, wobei das Gerät oder die Station **dadurch gekennzeichnet ist, dass** es (sie) einen Wasch- und Entnahmekopf nach einem der Ansprüche 1 bis 15 aufweist.
